Europäisches Patentamt

European Patent Office

Office européen des brevets

(11) Veröffentlichungsnummer: **0 084 793**
**A1**

(12) **EUROPÄISCHE PATENTANMELDUNG**

(21) Anmeldenummer: 83100156.5

(22) Anmeldetag: 11.01.83

(51) Int. Cl.³: **C 08 J 7/00**

(30) Priorität: 14.01.82 DE 3200841

(43) Veröffentlichungstag der Anmeldung: 03.08.83
Patentblatt 83/31

(84) Benannte Vertragsstaaten: **AT BE CH DE FR GB IT LI LU NL SE**

(71) Anmelder: **Herberts Gesellschaft mit beschränkter Haftung, Christbusch 25, D-5600 Wuppertal 2 (DE)**

(72) Erfinder: **Hellmann, Ernst-Udo, Chem.-Ing., Paul-Windgassen-Strasse 27, D-5630 Remscheid 11 (DE)**
Erfinder: **Stephan, Werner, Chem.-Ing., Jägerhofstrasse 25, D-5600 Wuppertal 1 (DE)**

(74) Vertreter: **Türk, Dietmar, Dr. rer. nat. et al, Redies, Redies, Türk & Gille Patentanwälte Brucknerstrasse 20, D-4000 Düsseidorf 13 (DE)**

(54) Verfahren und Vorrichtung zur Feststellung der Lackierfähigkeit einer Kunststoffoberfläche.

(57) Verfahren zur Feststellung der Lackierfähigkeit einer Kunststoffoberfläche, wobei man diese der Einwirkung von einem oder mehreren Lösungsmitteln unterwirft und entsprechend dem Testergebnis die verträgliche Lacktype auswählt. Die Erfindung betrifft auch eine Vorrichtung zur Durchführung dieses Verfahrens, die ein zu öffnendes Gehäuse aufweist, in dem mehrere einzelne Behälter für Lösungsmittel herausnehmbar angeordnet sind.

Anmelder: Herberts Gesellschaft mit beschränkter Haftung, Christbusch 25, 5600 Wuppertal

Verfahren und Vorrichtung zur Feststellung der Lackierfähigkeit einer Kunststoffoberfläche

Aus verschiedenen Gründen nimmt der Einsatz von Kunststoffen in Gebrauchsgegenständen, Fahrzeugen und dergleichen ständig zu. Häufig besteht nachträglich ein Bedürfnis, derartige Kunststoffoberflächen zu lackieren. Je nach Art des Kunststoffs können aber nur bestimmte dazu passende Lacke eingesetzt werden, um eine dauerhafte Lackierung zu erhalten. Dem Fachmann ist zwar bekannt, welche Kunststoffe mit welchen Lacken lackierfähig sind, und es gibt zahlreiche entsprechende Veröffentlichungen und insbesondere Hinweise der Lackhersteller, in denen diese in Merkblättern und dergleichen dem Käufer die Anweisung geben, zur Lackierung welcher Kunststoffe die jeweiligen Lacke geeignet sind.

Für Abnehmer von Kunststoff-Gebrauchsgegenständen, Fahrzeugen und dergleichen ist es aber häufig nicht oder nur sehr schwer möglich, festzustellen, um welchen Kunststoff es sich im jeweiligen Fall handelt. Er kann deshalb nicht den geeigneten Lack zur Lackierung auswählen.

Der vorliegenden Erfindung liegt die Aufgabenstellung zugrunde, ein einfaches Verfahren zur Feststellung der Lackierfähigkeit einer Kunststoffoberfläche zu finden.

Diese Aufgabenstellung kann gemäß der Erfindung in überraschend einfacher Weise dadurch gelöst werden, daß man die Kunststoffoberfläche der Einwirkung von einem oder mehreren Lösungsmitteln unterwirft und entsprechend dem Testergebnis die verträgliche Lacktype auswählt.

Es wird dazu die Kunststoffoberfläche zunächst mit einem
stark polaren Lösungsmittel behandelt. Wenn die Oberfläche
sich nicht anlöst, sondern nur matt wird, handelt es sich
bei der Kunststoffoberfläche um ein Ethylen-Propylen-Dien-
Mischpolymerisat oder einen in gleicher Weise zu lackierenden
Kunststoff. Dieser kann dann mit den dafür bekannten geeigneten Lacken lackiert werden.

Wenn die Kunststoffoberfläche sich nicht anlöst, d.h. unlöslich ist, wird sie mit einem aggressiven Lösungsmittel getestet. Wenn sie darin unlöslich ist, wird eine Kratzprobe,
z.B. mit einem Taschenmesser oder einem ähnlichen Gegenstand
durchgeführt. Wenn die Oberfläche bei der Kratzprobe hart,
eher spröde, erscheint, handelt es sich bei dem Kunststoff
um glasfaserverstärkte ungesättigte Polyester.
        Wenn bei der Kratzprobe festgestellt wird, daß
die Oberfläche wachsartig und flexibel ist, handelt es sich
bei dem Kunststoff um Polyethylen, Polypropylen oder Mischpolymerisate daraus. Diese sind nicht lackierbar.

Wenn bei Verwendung des aggressiven Lösungsmittels die Oberfläche angelöst wird, kann danach durch Daumendruck festgestellt
werden, ob die Oberfläche hart, flexibel oder sehr weich
bzw. schwammig ist. Wenn die Oberfläche hart ist, handelt
es sich bei dem Kunststoff um Polyamid. Wenn sie flexibel
ist, handelt es sich um Polyurethan oder Polyurethan-Schaum.
Wenn sie sehr weich und schwammig ist, handelt es sich um
Weich-Polyurethan oder entsprechenden Schaum. In jedem Fall
kann dann der Kunststoff mit den bekannten hierfür geeigneten Lacken lackiert werden.

Wenn sich die Kunststoffoberfläche bei Anwendung des oben
erwähnten stark polaren Lösungsmittels anlöst, wird mit
einem etwas weniger polaren Lösungsmittel der gleiche Test
durchgeführt. Wenn die Kunststoffoberfläche gegenüber diesem
weniger polaren Lösungsmittel unlöslich ist, handelt es sich
um PVC oder Mischpolymerisate davon. Es kann dann mit den hierfür geeigneten bekannten Lacken lackiert werden.

Wenn die Oberfläche sich jedoch anlöst, wird mit einem
wiederum weniger polaren Lösungsmittel behandelt. Ist die
Oberfläche gegenüber diesem weniger polaren Lösungsmittel
unlöslich, handelt es sich bei der Kunststoffoberfläche um
Polycarbonat oder dessen Mischpolymerisat. Es kann dann
mit den hierfür bekannten Lacken lackiert werden. Löst sich
die Oberfläche jedoch an, wird mit einem wiederum weniger
polaren Lösungsmittel getestet. Ist die Oberfläche darin
unlöslich, handelt es sich bei der Kunststoffoberfläche
um Acrylnitril-Butadien-Styrol-Polymerisate (ABS) oder
Polyphenylenoxid (PPO). Wenn die Oberfläche sich anlöst
und sich aufrubbelt, handelt es sich um Polystyrol (PS).
In jedem Fall kann mit den entsprechenden bekannten geeigneten Lacken lackiert werden.

Die Lösungsmittel mit abnehmender Polarität werden nacheinander in der vorliegenden Beschreibung mit den Buchstaben
A, B, C bzw. D bezeichnet. Das aggressive Lösungsmittel
wird mit E bezeichnet.

Als Lösungsmittel A, d.h. als zuerst angewandtes Lösungsmittel, wird vorzugsweise Ethylacetat verwendet. Als
aggressives Lösungsmittel wird vorzugsweise n-Methylpyrrolydon verwendet. Als zweites polares Lösungsmittel, das
also weniger polar als das Lösungsmittel A ist, wird vorzugsweise Xylol verwendet (es handelt sich hierbei zweckmäßig um das sogenannte technische Xylol, wie es als Lösungsmittel in der Technik allgemein eingesetzt wird). Als
Lösungsmittel C wird zweckmäßig Terpentinöl, und als Lösungsmittel D zweckmäßig Testbenzin K 30 (Kristallöl 30)
verwendet.

Die vorgenannten Lösungsmittel können bis zu 10 Gew.-%,
zweckmäßig mindestens 2 Gew.-%, und vorzugsweise mindestens
5 und höchstens 7 Gew.-% andere Lösungsmittel enthalten.

0084793

Dabei wird für das Lösungsmittel A als Zusatzlösungsmittel zweckmäßig Butylacetat, für die Lösungsmittel B und C zweckmäßig n-Butanol, für das Lösungsmittel D zweckmäßig sec.-Butanol und für das Lösungsmittel E Butylacetat als (zweckmäßig) Zusatzlösungsmittel verwendet.

Die Durchführung des Verfahrens gemäß der Erfindung erfolgt im einzelnen wie folgt: Das zu prüfende Kunststoffteil wird nach dem oben beschriebenen einfachen Schema mit den Test-Lösungen behandelt. Man tränkt dazu einen sauberen kleinen Lappen zunächst mit etwas Lösung A und reibt damit etwa 20 bis 30 Sekunden über den Kunststoff (am besten auf der Rückseite oder einer wenig sichtbaren Stelle). Der Testablauf ist dann wie oben beschrieben. Sofern aus dem jeweiligen Test noch nicht ersichtlich ist, um welchen Kunststoff es sich handelt, wird, wie oben beschrieben, mit der nächsten Test-Lösung geprüft.

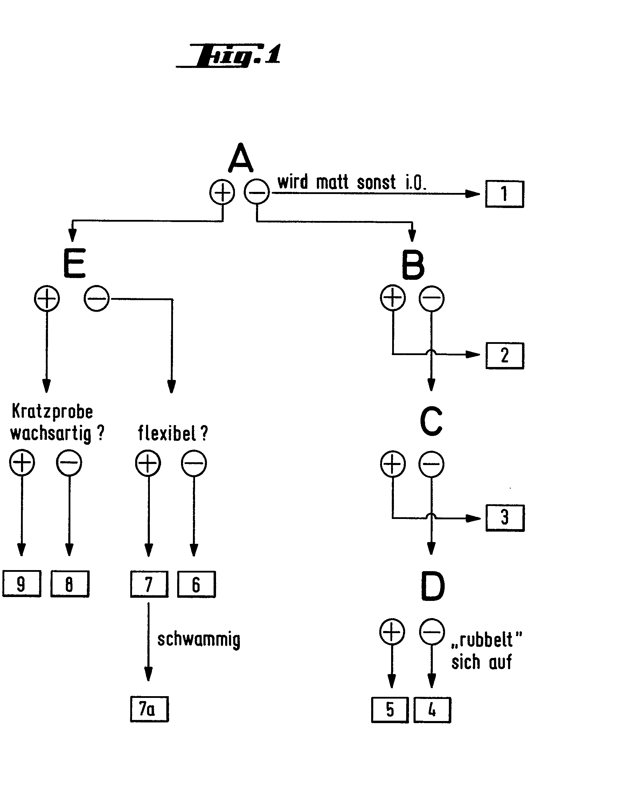

In der beiliegenden Fig. 1 ist die Testfolge schematisch dargestellt. Die großen Buchstaben bezeichnen dabei die Testlösungen. Das Plus-Zeichen bedeutet, daß der Kunststoff durch die jeweilige Testlösung nicht angelöst wird. Das Minus-Zeichen bedeutet also, daß angelöst wird. Die arabischen Ziffern stellen Code-Nummern dar für die jeweiligen Kunststoffe.

In der nachfolgenden Tabelle 1 sind übersichtlich die Code-Nummern, die chemischen Bezeichnungen der jeweiligen entsprechenden Kunststoffe und beispielsweise zweckmäßig geeignete Lacke und/oder Vorbehandlungen genannt.

Es ist weiterhin Aufgabe der Erfindung, eine Vorrichtung bereitzustellen, mit der das erfindungsgemäße Verfahren in besonders zweckmäßiger Weise schnell praktiziert werden kann.

Dieser Teil der Aufgabe wird erfindungsgemäß durch eine Vorrichtung gelöst, die ein zu öffnendes Gehäuse aufweist, in welchem nebeneinander gut sichtbar aufgereiht mehrere einzelne Behälter für Lösungsmittel herausnehmbar angeordnet sind und das eine Gebrauchsanweisung und gegebenenfalls auch einen Lappen zum Auftragen der einzelnen Lösungsmittel enthält. Eine derartige Vorrichtung läßt sich an jedem beliebigen Arbeitsplatz aufstellen und enthält übersichtlich alle für die Durchführung des Verfahrens erforderlichen Mittel und Anweisungen. Die Bedienungsperson kann die einzelnen Testflüssigkeiten bzw. Lösungsmittel aus den entsprechend gekennzeichneten Behältern in der vorgesehenen Reihenfolge auf das zu untersuchende Material auftragen und dann anhand der Gebrauchsanweisung, welche auch die Tabelle 1 umfaßt, die für das Lackieren richtige Lacktype bestimmen.

Vorteilhafte Ausgestaltungen der Erfindung sind Gegenstand der Ansprüche 11 bis 15.

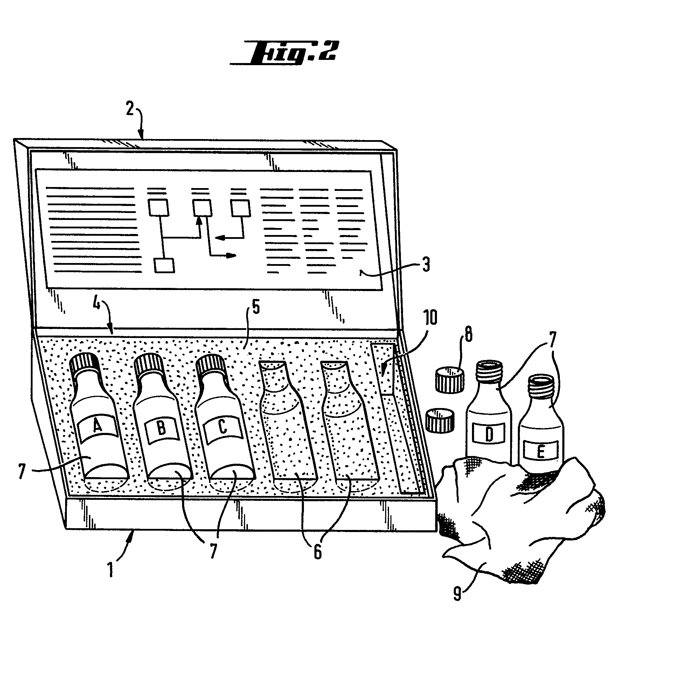

In Fig. 2 ist schematisch eine praktische Ausführungsform der erfindungsgemäßen Vorrichtung schaubildlich dargestellt, wobei die Lösungsmittel in verschiedenen Flaschen untergebracht sind und in der Zeichnung zwei dieser Flaschen aus dem kastenartigen Gehäuse für Testzwecke entnommen worden sind.

Die in Fig. 2 dargestellte Vorrichtung weist ein kastenartiges Gehäuse 1 auf, dessen Oberseite als hochklappbarer Deckel 2 ausgebildet ist. In die Innenseite des Deckels 2 ist auf einem besonderen Bogen 3 eine Gebrauchsanweisung eingelegt, welche auch eine Tabelle wie die Tabelle 1 umfassen kann.

Im Unterteil 4 des Gehäuses 1 befindet sich ein Einsatz 5, der in seiner geneigt verlaufenden Oberseite eine Mehrzahl von Ausnehmungen 6 enthält, wobei jede dieser Ausnehmungen 6 jeweils eine Flasche 7 aufnehmen kann, wie
die Zeichnung zeigt. Jede der Flaschen enthält eines der
Lösungsmittel A bis E. In der Zeichnung sind die die
Lösungsmittel D und E enthaltenden Flaschen aus dem Gehäuse herausgenommen und deren Deckel 8 ist abgeschraubt,
so daß das in ihnen enthaltene Lösungsmittel mittels eines
Lappens 9 auf eine nicht dargestellte zu testende Oberfläche aufgetragen werden kann.

Der Einsatz 5 enthält an der einen Seite eine weitere Ausnehmung 10, in die der Lappen 9 eingelegt werden kann.
Somit sind alle für die Durchführung des Verfahrens erforderlichen Gegenstände übersichtlich in dem kastenartigen Gehäuse 1 untergebracht. Wenn der Deckel 2 geöffnet
ist, wie in Fig. 2 gezeigt, liegen die verschiedenen Flaschen 7 gut zugänglich vor dem Benutzer und die Gebrauchsanweisung steht über den Flaschen, wodurch eine besonders
zweckmäßige Handhabung gewährleistet ist. Da die Flaschen 7
etwa zur Hälfte in der betreffenden Vertiefung 6 liegen,
sind sie leicht herausnehmbar.

Wie oben bei dem Ethylen-Propylen-Dien-Mischpolymerisat
gesagt wurde, muß es sich gemäß diesem Test nicht um dieses
spezielle Polymerisat handeln, sondern es kann auch ein
in gleicher Weise zu lackierender Kunststoff sein. Im
Sinne der Erfindung ist es nicht wesentlich, welche chemische Zusammensetzung die Kunststoffoberfläche hat, sondern mit welchen Lacken sie lackiert werden kann. Der
Test ermittelt diese Lackierfähigkeit. Das gleiche gilt
sinngemäß auch für die anderen oben beispielsweise genannten Kunststoffe, die genannt wurden, damit der Fachmann weiß, welche Lacke zum Lackieren der durch den Test
definierten Oberfläche geeignet sind.

Tabelle 1

| Herberts Code-Nr. | Chemische Bezeichnung | Reinigung | Falls erforderlich | | Kunststoff-Haftprimer | Grundier-Füller | Decklack | 2-Schicht-Metallic | | Anmerkungen |
| --- | --- | --- | --- | --- | --- | --- | --- | --- | --- | --- |
| | | | Spachteln | Schleifen (max. Körnung) | | | Unifarben 2K-Standocryl | Basis-Lack | 2K-Klarlack | |
| 1 | EPDM-Ethylen-Propylen-Dien-Mischpolymerisat | Silikon-entferner | 2K-Kunststoff-Plastic | P 600 | 47509 | | + 20-30 % 2K-Weichmacher | ● | + 20-30 % 2K-Weichmacher | |
| 2 | PVC-Polyvinylchlorid u.d. Mischpolymerisat | Silikon-entferner | | | | 2K-Füll-primer | + 10 % 2K-Weichmacher | ● | + 10 % 2K-Weichmacher | |
| 3 | PC-Polycarbonat u.d. Mischpolymerisat | PC-Verdünnung R 11100 | | P 600 | PC-Grundierung 47249 | | + 30 % 2K-Weichmacher | ● | + 30 % 2K-Weichmacher | lösungs-mittel-empfindlich |
| 4 | PS-Polystyrol | Wasser ggf. mit Spülmittel | | | 47203 | | + 10 % 2K-Weichmacher | ● | + 10 % 2K-Weichmacher | lösungs-mittel-empfindlich |
| 5 | ABS, Acrylnitril-Butadien-Styrol, PPO-Polyphenylenoxid | Silikon-entferner | | | | 2K-Füll-primer | + 10 % 2K-Weichmacher | ● | + 10 % 2K-Weichmacher | lösungs-mittel-empfindlich |
| 6 | PA Polyamid | Silikon-entferner | | | | 2K-Füll-primer | + 10 % 2K-Weichmacher | ● | + 10 % 2K-Weichmacher | vor Lackier. 30'/80° C tempern |
| 7 | PUR-Polyurethan-Schaum | Silikon-entferner | 2K-Kunststoff-Plastic | P 600 | 47510 | | + 20-30 % 2K-Weichmacher | ● | + 20-30 % 2K-Weichmacher | |
| 7a | PUR weich-Polyurethan-Schaum | Silikon-entferner | | | 47510 | | + 100 % 2K-Weichmacher | ● | seidenmatt 66765, glänzend + 100 % 2K-Weichmacher | max. 45 °C, keine Luft-trocknung |
| 8 | GF-UP (GfK)-glasfaserverst. unges. Polyester | Silikon-entferner | Stando-soft-Fein-plastic | P 400 | | 2K-Füller weiß; 2K-Nonstop-Sealer | ohne Weichmacher | ● | ohne Weichmacher | max. 60 °C |
| 9 | PE,-Polyäthylen, PP-Polypropylen | nicht lackierbar | | | | | | | | |

Patentansprüche:

1. Verfahren zur Feststellung der Lackierfähigkeit einer Kunststoffoberfläche, d a d u r c h   g e k e n n z e i c h - n e t, daß man sie der Einwirkung von einem oder mehreren Lösungsmitteln unterwirft und entsprechend dem Testergebnis die verträgliche Lacktype auswählt.

2. Verfahren nach Anspruch 1, dadurch gekennzeichnet, daß als erstes polares Lösungsmittel A Ethylacetat verwendet wird.

3. Verfahren nach Anspruch 1 oder 2, dadurch gekennzeichnet, daß für den Fall, daß das Lösungsmittel A die Kunststoffoberfläche anlöst, als zweites Lösungsmittel B Xylol verwendet wird.

4. Verfahren nach Anspruch 3, dadurch gekennzeichnet, daß für den Fall, daß das Lösungsmittel B die Kunststoffoberfläche anlöst, als drittes Lösungsmittel C Terpentinöl verwendet wird.

5. Verfahren nach Anspruch 4, dadurch gekennzeichnet, daß für den Fall, daß das Lösungsmittel C die Kunststoffoberfläche anlöst, als viertes Lösungsmittel D Testbenzin K 30 (Kristallöl 30) verwendet wird.

6. Verfahren nach Anspruch 1 oder 2, dadurch gekennzeichnet, daß für den Fall, daß die Kunststoffoberfläche im Lösungsmittel A unlöslich ist und auch nicht matt wird, als Lösungsmittel E n-Methylpyrrolidon verwendet wird.

7. Verfahren nach Anspruch 6, dadurch gekennzeichnet, daß dann, wenn das Lösungsmittel E die Kunststoffoberfläche anlöst, durch Druckprobe geprüft wird, ob der Kunststoff hart, flexibel oder sehr weich bzw. schwammig ist.

8. Verfahren nach Anspruch 6, dadurch gekennzeichnet, daß für den Fall, daß die Kunststoffoberfläche im Lösungsmittel E unlöslich ist, durch Kratzprobe festgestellt wird, ob der Kunststoff hart ist oder eine wachsartige Oberfläche aufweist.

9. Verfahren nach einem oder mehreren der Ansprüche 1 bis 8, dadurch gekennzeichnet, daß die Lösungsmittel A bis E bis zu 1o Gew.-%, bezogen auf die Gesamtmenge des Lösungsmittels, vorzugsweise 5 bis 7 Gew.-%, eines anderen Lösungsmittels enthalten.

1o. Vorrichtung zum Durchführen des Verfahrens nach einem der Ansprüche 1 bis 9, dadurch gekennzeichnet, daß sie ein zu öffnendes Gehäuse (1) aufweist, in dem nebeneinander gut sichtbar aufgereiht mehrere einzelne Behälter (7) für verschiedene Lösungsmittel herausnehmbar angeordnet sind und das eine Gebrauchsanweisung (3) enthält.

11. Vorrichtung nach Anspruch 1o, dadurch gekennzeichnet, daß die Oberseite des kastenartigen Gehäuses (1) als aufklappbarer Deckel (2) ausgebildet ist.

12. Vorrichtung nach Anspruch 1o oder 11, dadurch gekennzeichnet, daß das Gehäuse (1) einen Einsatz (5) mit mehreren Vertiefungen (6) zur Aufnahme je eines Behälters (7) enthält.

13. Vorrichtung nach Anspruch 12, dadurch gekennzeichnet, daß die Oberseite des Einsatzes (5) geneigt zur Unterseite des Gehäuses (1) liegt.

0084793

14. Vorrichtung nach Anspruch 12 oder 13, dadurch gekennzeichnet, daß der Einsatz (5) eine weitere Vertiefung
(1o) zur Aufnahme eines Lappens (9) enthält.

15. Vorrichtung nach einem der Ansprüche 1o bis 14, dadurch
gekennzeichnet, daß die Gebrauchsanweisung (3) an der Innenseite des Deckels (2) des Gehäuses (1) angebracht
ist.

0084793

**Fig.1**

**Fig.2**

0084793

Europäisches
Patentamt

ERKLÄRUNG,
die nach Regel 45 des Europäischen Patentübereinkommens für das weitere Verfahren als
europäischer Recherchenbericht gilt

Nummer der Anmeldung

EP 83 10 0156

| Nach Auffassung der Recherchenabteilung entspricht die vorliegende europäische Patentanmeldung den Vorschriften des Europäischen Patentübereinkommens so wenig, daß es nicht möglich ist, auf der Grundlage aller Patentansprüche sinnvolle Ermittlungen über den Stand der Technik durchzuführen.<br>Grund: | KLASSIFIKATION DER ANMELDUNG (Int. Cl.³) |
|---|---|
| Der Gegenstand der Anmeldung hat, ungeachtet der etwaigen Entscheidung der Prüfungsabteilung, den Anschein nicht patentierbar zu sein (Artikel 52(2) c EPÜ) und ist nicht recherchiert worden (Regel 45 EPÜ) | C 08 J 7/00 |

| Recherchenort<br>Den Haag | Abschlußdatum der Recherche<br>07-04-1983 | Prüfer<br>HALLEMEESCH |
|---|---|---|

EPA Form 1504  06.78